# FASCICULE DE BREVET EUROPEEN

(11) **EP 0 279 737 B1**
(45) Date de publication et mention de la délivrance du brevet: **19.01.1994**
(21) Numéro de dépôt: 88400317.9
(22) Date de dépôt: 12.02.1988
(51) Int. Cl.: B26D 3/16, B23D 21/10

(54) **Coupe-tube à lame guidée pour tubes en matière plastique cylindriques ou non**
Schneidvorrichtung für Kunststoffrohre mit geführtem Messer
Plastic tube cutting apparatus with a guided cutter

(30) Priorité: 19.02.1987 FR 8702425
(43) Date de publication de la demande: 24.08.1988
(73) Titulaire: VIRAX S.A., F-51206 Epernay Cédex (FR)
(72) Inventeur: Aubriot, Claude, F-51200 Epernay (FR)
(74) Mandataire: Colas, Jean-Pierre

(56) Documents cités:
- GB-A- 378 654
- US-A- 2 248 642
- US-A- 2 539 124

## Description

La présente invention se rapporte à un appareil manuel à couper les tubes en matière plastique cylindriques ou non du genre comportant une arcade-guide fermée par une arcade inférieure à ouverture totale permettant d'intervenir sur les canalisations en place aussi facilement que sur celles en cours d'installation. Si pour couper les tubes en matière plastique les plus couramment utilisés actuellement, il n'y a pas de grosses difficultés, il n'en va pas de même pour les tubes en polyéthylène haute densité livrés en couronne dont l'emploi tend à se généraliser sous l'impulsion des Services Publics dans les domaines suivants : transport de produits corrosifs, adduction d'eau, assainissement, tubage de canalisation défectueuse, distribution de gaz. Ces tubes du fait de leur mode de livraison en couronnes on sur tourets sout toujours fortement ovalisés et en raison de leur forte épaisseur ils présentent une grande rigidité. Il est donc pratiquement impossible de les couper à la molette car le coupe-tube à molette qu'il soit à arcade ou non ne permet de couper que les tubes rigides très peu ovalisés (comme les tubes en acier) ou les tubes souples (comme ceux en PVC) ovalisés ou non se déformant sous la pression de la molette. Pour résoudre ce problème une première solution a été proposée : il s'agit des coupe-tubes à lame genre cisaille mais ces derniers qui ne sont que des appareils lourds reposant sur un socle ne permettent toujours pas le travail en place.

Le document US-A-2.248.642 décrit un dispositif destiné à couper des câbles électriques ou analogues, qui comprend une lame de coupe, dont le bord d'attaque est en forme d'arc de cercle convexe, montée sur un porte-lame solidaire du piston d'un vérin, cette lame se déplaçant entre les deux branches parallèles d'une arcade-guide fermée par une arcade supérieure à ouverture totale pourvue d'une surface d'appui pour le câble. On ouvre cette arcade supérieure pour mettre le dispositif à cheval sur le câble à sectionner, puis on agit sur le vérin pour déplacer la lame de coupe vers le câble, ce qui assure d'abord une mise en place d'équerre par appui du câble contre l'arcade supérieure, puis la coupe du câble. Après la coupe, un des tronçons de câble est libéré, alors que l'autre peut se déplacer axialement mais ne peut aller vers le bas à cause de la présence de selles de maintien fixées sur les branches de l'arcade, sur le côté par rapport au trajet de la lame.

La présente invention a pour but de fournir un coupe-tube qui :
- permette de couper facilement à l'équerre les tubes en polyéthylène quelle que soit leur ovalisation, en atelier aussi bien qu'en chantier et ce sans avoir besoin de point d'appui,
- réalise une coupe sans enlèvement de matière donc sans copeau, ce qui ne peut que satisfaire les Services Techniques du Gaz de France qui apprécieront de ne plus retrouver dans les compteurs des copeaux tombés dans les canalisations lors des interventions d'entretien ou de modification du réseau,
- puisse être utilisé dans une tranchée très étroite, et
- empêche une détente brutale des tronçons de tube en fin de coupe sous l'effet des contraintes dues au conditionnement en touret.

Pour obtenir ce résultat, l'invention fournit un coupe-tube comprenant :
- une arcade-guide comportant deux branches parallèles et fermée par une arcade inférieure à ouverture totale que l'on ouvre pour mettre le coupe-tube à cheval sur le tube,
- un banc porté par l'arcade inférieure et destiné à supporter le tube lors de l'opération de coupe,
- une lame de coupe montée sur un porte-lame qui est guidé entre les branches de l'arcade-guide et peut être déplacé à l'aide d'une vis de commande en direction de l'arcade inférieure,
ledit tube, une fois ceinturé par les deux arcades, étant en contact avec l'arcade inférieure pour que la lame, en descendant sous la pression de la vis, puisse venir le serrer en assurant d'abord une mise en place d'équerre et ensuite la coupe, de sorte que le serrage ainsi réalisé lui permette d'être le support dudit coupe-tube pendant toute l'opération de coupe,
ledit porte-lame présentant entre les deux points de fixation de la lame un évidement de taille suffisante pour lui permettre de recevoir le plus gros tube à couper et ayant une épaisseur sensiblement égale à celle du banc et suffisante afin que le tube soit enveloppé de part et d' autre de la lame et ne puisse pas se détendre brutalement en fin de coupe sous l'effet des contraintes dues au conditionnement en touret.

Dans ce qui suit, l'invention est exposée en détail à l'aide de dessins représentant seulement un mode d'exécution donné à titre d'exemple non limitatif.

La figure 1 représente le coupe-tube objet de l'invention au commencement de la coupe, vu de face avec la moitié gauche vue en coupe.
- la figure 2 représente la section du coupe-tube suivant A-A.
- la figure 3 représente une variante de la section du coupe-tube suivant A-A.
- la figure 4 représente en coupe une autre forme d'arcade inférieure pourvue d'un support de tube constitué de plaques métalliques planes.
- la figure 5 représente la coupe suivant B-B de l'arcade inférieure.
- la figure 6 représente la lame du coupe-tube.
- la figure 7 représente grossie quatre fois la section suivant C-C de la lame du coupe-tube.
- la figure 8 montre le mode de fixation par pincement de la lame mince.
- la figure 9 montre un autre mode de fixation de la lame utilisé dans le cas de l'emploi d'une lame épaisse.

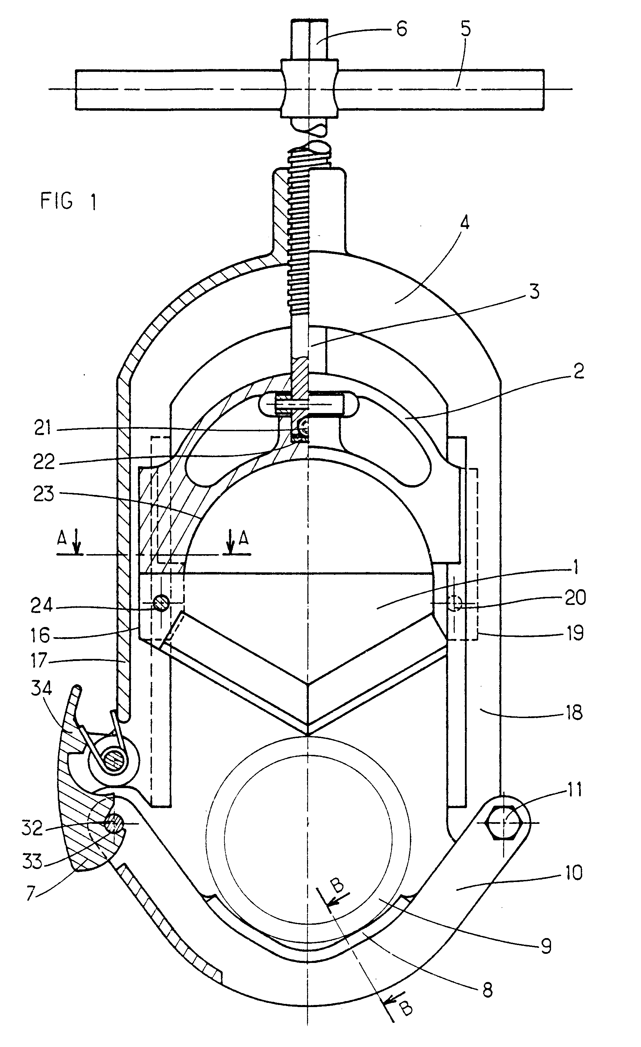

En se reportant à la figure 1, on voit que la lame 1 de ce coupe-tube est montée sur un porte-lame 2 qui se déplace sous l'action d'une vis de commande 3 entre les deux branches parallèles d'une arcade-guide 4 fermée par une arcade inférieure 10 maintenue en place d'un côté par l'axe d'articulation 11 et de l'autre par un dispositif de verrouillage 7 sur lequel on peut agir pour que cette arcade puisse pivoter autour de son axe d'articulation jusqu'à l'ouverture totale ; ce qui permet de placer le coupe-tube directement à cheval sur le tube à sectionner 9 . La vis de commande 3 est pourvue d'une tige de manoeuvre 5 et d'un carré d'entraînement 6 permettant soit de la raccorder à un ensemble de motorisation, soit de la faire tourner à l'aide d'une clé de manoeuvre de vanne de conduite enterrée du genre des clés à douille utilisées par les services du Gaz de France. Lorsque la lame de coupe attaque le tube 9 sous la pression de la vis 3 , le banc de section curviligne 8 ou de toute autre forme suivant le profil à couper, vient au contact du tube sur lequel il se plaque obligeant ainsi le coupe-tube à se placer à l'équerre sur ledit tube à sectionner 9 qui serré de cette façon fait office de support du coupe-tube pendant toute la durée de l'opération de coupe.

Toujours sur la figure 1 on voit que la partie supérieure du porte-lame 2 reçoit la poussée de la vis de commande 3 par l'intermédiaire d'une butée ou d'une bille en acier 21 tournant sur un grain 22 tandis que la partie inférieure présente entre les deux points de fixation 24, 20 de la lame un évidement semi-circulaire 23 de diamètre légèrement supérieur à celui du plus gros tube à couper.

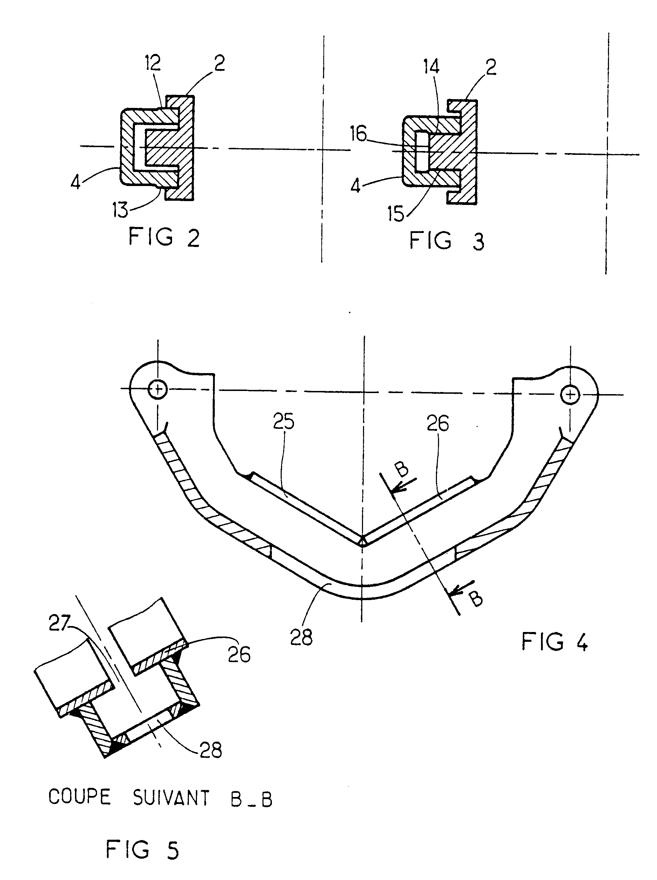

En se reportant aux figures 2 et 3 on constate que le guidage du porte-lame 2 entre les deux branches de l'arcade 4 peut être réalisé de deux façons différentes : des portées usinées sont prévues sur les parties extérieures 12, 13 de chaque branche qui doivent être en contact avec le porte-lame pour qu'il puisse glisser dessus (fig.2) ou alors ces portées sont prévues sur les parties intérieures 14, 15 de ces mêmes ailes pour que le porte-lame puisse y coulisser intérieurement. Que l'on retienne le premier mode de guidage ou sa variante de la figure 3, la largeur de la lame de coupe peut être égale à celle du porte-lame 2 comprise entre ses parties saillantes (16) 19 se déplaçant entre les ailes des deux branches de l'arcade-guide 4 visible sur la figure 1. Il en résulte que pour une largeur de lame donnée, l'encombrement de l'arcade-guide est très réduit.

Pour la coupe des tubes de gros diamètre livrés en touret, l'épaisseur du porte-lame au niveau de l'évidement (23) peut être augmentée jusqu'à être égale à celle du banc (8) de l'arcade inférieure pour qu'en fin de coupe sa forme semi-circulaire vienne envelopper suffisamment le tube sous contrainte de chaque côté de la lame pour empêcher la détente brutale des tronçons sectionnés qui est généralement très dangereuse pour l'opérateur tant les contraintes existant entre la partie déroulée du tube et celle restant sur le touret sont importantes.

La figure 4 avec la coupe suivant B-B représentée figure 5 montre une autre forme d'arcade inférieure dans laquelle le banc de section curviligne a été remplacé par des plaques métalliques planes 25, 26 présentant comme ce dernier une échancrure 27 située dans le plan de coupe de lame pour permettre à ladite lame de venir achever sa course en-dessous desdites plaques en assurant ainsi un sectionnement complet du tube à couper. Cette échancrure 27 devant toujours être libre pour le passage de la lame, une ouverture 28 plus courte et plus large pratiquée suivant le même axe dans la partie la plus basse de l'arcade inférieure empêche les saletés se trouvant éventuellepent sur le tube à couper de venir obstruer ladite échancrure en s'accumulant dans le fond de l'arcade. De plus ce coupe-tube étant un appareil de chantier susceptible d'être utilisé dans des endroits boueux, cette ouverture 28 facilite le nettoyage.

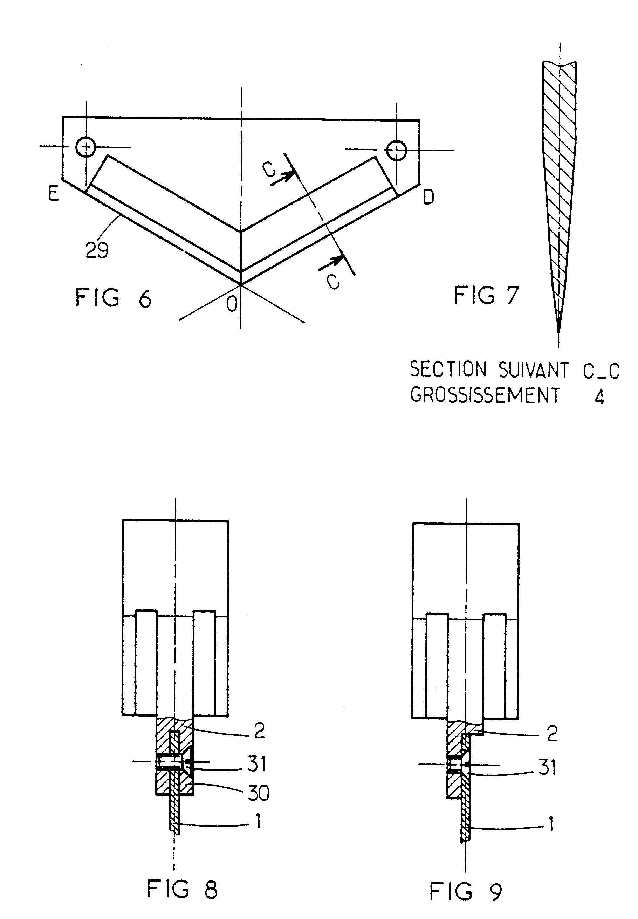

La figure 6 montre une lame de coupe dont l'angle au sommet (, ) est de 120° car en le choisissant entre 100 et 150 degrés cela permet d'avoir une attaque du tube sans déformation. Cet angle de 120 degrés qui est égal à celui existant entre les deux plaques métalliques planes 25, 26 de l'arcade inférieure permet d'obtenir le sectionnement complet du tube avec un minimum de déformation élastique et avec un minimum de pénétration de la lame dans l'échancrure 27 . En limitant la course de la lame vers le bas à cette faible pénétration nécessaire à la coupe, le tranchant 29 de ladite lame est dans cette position parfaitement protégé par les flancs de l'arcade inférieure et le coupe-tube peut être transporté en toute sécurité dans l'état où il se trouve une fois la coupe terminée.

En se reportant à la figure 7 on constate que la section de la lame de coupe est symétrique et qu'elle présente une rupture de pente. Cette symétrie est nécessaire pour obtenir une coupe parfaitement d'équerre.

La figure 8 montre le mode de fixation par pincement qui est utilisé pour les lames de coupe de faible épaisseur dites "minces". A cette fin les extrémités inférieures du porte-lame 2 sont pourvues de chapes 30 dont l'élasticité est mise à profit pour obtenir le pincement souhaité de la lame par un simple serrage des vis 31 .

La figure 9 montre une variante du mode de fixation plus facile à réaliser mais utilisable seulement dans le cas de l'emploi d'une lame épaisse qui bien que maintenue que d'un côté possède une rigidité suffisante pour ne pas dévier du plan de coupe sous les efforts latéraux rencontrés en utilisation normale.

Sur les chantiers de travaux publics ce genre de coupe-tube doit pouvoir être transporté d'un endroit à l'autre en toute sécurité. Pour cela lorsque la lame est complètement descendue dans la position recommandée pour le transport, le porte-lame repousse l'axe d'accrochage 32 de l'arcade inférieure dans le fond de la gorge 33 du verrou 7 visible sur la figure 1 et ainsi le déverrouillage permettant l'ouverture de l'arcade par simple pression sur la partie supérieure 34 du verrou 7 est impossible.

La coupe est rapide car il suffit de remonter la lame en faisant tourner la vis de commande 3 et d'ouvrir le coupe-tube par simple pression sur la partie supérieure du verrou 7 pour pouvoir le refermer sur le tube qui est ensuite sectionné par la descente de la lame sous l'action de la vis de commande que l'on tourne alors en sens inverse.

La préhension et le transport des plus gros de ces coupe-tubes selon l'invention peut être améliorée par l'adjonction d'une poignée en forme d'arceau que l'on fixe sur la partie supérieure de l'arcade-guide, ce qui modifie l'esthétique mais n'augmente pas l'encombrement et permet toujours de travailler dans des tranchées étroites dont la largeur peut ne pas excéder 2,5 fois le diamètre du plus gros tube accepté par l'appareil.

Ce coupe-tube à lame guidée est donc un appareil permettant de couper rapidement et en toute sécurité les tubes en polyéthylène et la plupart des tubes en matières plastiques cylindriques ou non difficiles à couper avec les coupe-tubes à molettes. Son domaine d'utilisation est celui de la pose et de l'entretien de ces tubes, notamment l'adduction d'eau, le tubage de canalisation défectueuse et la distribution du gaz.

## Revendications

1. Coupe-tube à lame-guidée comprenant :
- une arcade-guide (4) comportant deux branches parallèles et fermée par une arcade inférieure (10) à ouverture totale que l'on ouvre pour mettre le coupe-tube à cheval sur le tube,
- un banc (8) porté par l'arcade inférieure (10) et destiné à supporter le tube lors de l'opération de coupe,
- une lame de coupe (1) montée sur un porte-lame (2) qui est guidé entre les branches de l'arcade-guide (4) et peut être déplacé à l'aide d'une vis de commande (3) en direction de l'arcade inférieure (10),
ledit tube, une fois ceinturé par les deux arcades, étant en contact avec l'arcade inférieure (10) pour que la lame (1), en descendant sous la pression de la vis (3), puisse venir le serrer en assurant d'abord une mise en place d'équerre et ensuite la coupe, de sorte que le serrage ainsi réalisé lui permette d'être le support dudit coupe-tube pendant toute l'opération de coupe,
ledit porte-lame (2) présentant entre les deux points de fixation de la lame (1) un évidement (23) de taille suffisante pour lui permettre de recevoir le plus gros tube à couper et ayant une épaisseur sensiblement égale à celle du banc (8) et suffisante afin que le tube soit enveloppé de part et d'autre de la lame (1) et ne puisse pas se détendre brutalement en fin de coupe sous l'effet des contraintes dues au conditionnement en touret.

2. Coupe tube à lame guidée selon la revendication 1, dans lequel l'arcade inférieure est pourvue d'un banc constitué de plaques métalliques planes (25, 26) ou de section curviligne, ou de toute autre forme enveloppant le profil à couper et présentant une échancrure (27) qui permet l'achèvement de la course de la lame, caractérisé en ce que le fond de l'arcade inférieure présente dans sa partie la plus basse une ouverture (28) qui est plus courte et plus large que l'échancrure (27) sous laquelle elle se trouve.

3. Coupe-tube à lame guidée selon l'une des revendications 1 ou 2, caractérisé en ce que le bord d'attaque de la lame de coupe est en forme de V constituant une pointe avec un angle au sommet (O̅D̅, O̅E̅) compris entre 100 et 150° si bien que l'attaque du tube par une lame en forme de pointe permet la pénétration sous un effort faible qui est insuffisant pour provoquer une déformation notable du tube.

4. Coupe-tube à lame guidée selon la revendication 3, caractérisé en ce que l'angle au sommet du bord de la lame de coupe est égal à 120°.

5. Coupe-tube à lame guidée selon l'une des revendications 1 à 4, caractérisé en ce que sa vis de commande (3) est pourvue d'une tige de manoeuvre (5) et d'un carré d'entraînement (6) permettant respectivement d'effectuer la coupe de l'intérieur de la tranchée ou de l'extérieur à partir du sol soit à l'aide d'une clé à béquille comme les clés de manoeuvre de vanne soit par raccordement à un ensemble de motorisation.

## Claims

1. Pipe cutter with a guided blade, comprising :
- a guide saddle (4) having two parallel branches, and closed by a lower saddle (10) able to be completely opened and which can be opened for placing the pipe cutter astride the tube,
- a bed (8) carried by the lower saddle (10) and intended to support the tube during the cutting operation,
- a cutting blade (1) mounted on a blade holder (2) which is guided between the branches of the guide saddle (4) and which can be moved by the aid of a control screw (3) towards the lower saddle (10),
- the said tube, once surrounded by the two saddles engaging the lower saddle (10) so that the blade (1), when moving downwards under the pressure of the screw (3) can clamp providing first a square sitting and further the cutting, in such a way that this clamping allows the tube to be the support of the pipe cutter for the entire duration of the cutting operation;
- the said blade-holder (2) having, between the two points of fixation of the blade (1), a recess (23) of sufficient size, to permit it to receive the largest tube to be cut, and being of a thickness approximately equal to that of the bed (8) and sufficient for the tube being surrounded on both sides of the blade (1) and being prevented from violent springback at the end of the cutting operation because the stresses which result of the tube being conditionned in reel.

2. Pipe cutter with a guided blade according to claim 1, wherein the lower saddle is equipped with a bed compring metal plates (25, 26) which are plane, or of curved cross-section or of any other shape which surround the profile to be cut, and having an incision (27) which permits the run of the blade to terminate, characterized in that the bottom of the lower saddle has in its lower part an orifice (28) which is shorter and wider than the incision (27) beneath which it is provided.

3. Pipe cutter with a guided blade according one of the claim 1 or 2, characterized in that the cutting edge of the cutting blade is V-shaped with a vertex angle (, ) between 100 and 150°, so that when the tube is engaged by this pointed blade, it permits a penetration with a light effort which is not sufficient for causing an appreciable deformation of the tube.

4. Pipe cutter with a guided blade according to claim 3, wherein the vertex angle of the edge of the cutting blade is 120°.

5. Pipe cutter with a guided blade according to anyone of claims 1 to 4, characterized in that its control screw (3) is equipped with an actuating rod (5) and with a driving square (6) making it possible respectively to make the cut from the inside of a trench or from the outside from the ground, either by means of a socket wrench similar to the conventional valve-actuating wrenches or as a result of connection to a motorization unit.

## Patentansprüche

1. Rohrschneider mit geführtem Messer, umfassend:
- einen Führungsbügel (4), der zwei parallele Schenkel umfaßt und durch einen unteren Bügel (10) mit vollständiger Öffnung geschlossen ist, der geöffnet wird, um den Rohrschneider rittlings auf das Rohr aufzusetzen,
- eine Bank (8), die von dem unteren Bügel (10) getragen ist und dazu bestimmt ist, das Rohr bei dem Schneidvorgang zu tragen,
- ein Schneidmesser (1), das auf einem Messerhalter (2) montiert ist, der zwischen den Schenkeln des Führungsbügels (4) geführt ist und mit Hilfe einer Antriebsschnecke (3) in Richtung auf den unteren Bügel (10) bewegt werden kann,
wobei dieses Rohr, sobald es von den beiden Bügeln umschlossen ist, mit dem unteren Bügel (10) in Kontakt ist, so daß das Messer (1) bei seiner Abwärtsbewegung unter dem Druck der Schnecke (3) es einklemmen kann, indem es zunächst das Einnehmen einer rechtwinkligen Haltung und dann den Schnitt gewährleistet, so daß die auf diese Weise vorgenommene Einklemmung ihm gestattet, während des ganzen Schneidvorgangs der Träger dieses Rohrschneiders zu sein, und dieser Messerhalter (2) zwischen den beiden Befestigungspunkten des Messers (1) eine Aussparung (23) von ausreichender Größe besitzt, um das größte zu schneidende Rohr aufnehmen zu können, und eine Dicke hat, die im wesentlichen gleich der der Bank (8) und so groß ist, daß das Rohr zu beiden Seiten des Messers (1) umhüllt ist und sich nicht am Hubende unter der Einwirkung der Spannungen, die durch die Aufmachung auf Trommeln erzeugt werden, plötzlich entspannen kann.

2. Rohrschneider mit geführtem Messer nach Anspruch 1, bei dem der untere Bügel mit einer Bank versehen ist, die aus Metallplatten (25, 26) besteht, die eben oder im Schnitt gekrümmt sind oder jede andere Form haben, das zu schneidende Profil umhüllen und eine Aussparung (27) besitzen, die die Vollendung der Messerbewegung gestattet, dadurch gekennzeichnet, daß der Boden des unteren Bügels in seinem untersten Teil eine Öffnung (28) besitzt, die kürzer und breiter als die Aussparung (27) ist, unter der sie sich befindet.

3. Rohrschneider mit geführtem Messer nach einem der Ansprüche 1 oder 2, dadurch gekennzeichnet, daß die Angriffskante des Schneidmessers die Form eines V's hat, das eine Spitze mit einem Spitzenwinkel (OD, OE) zwischen 100 und 150° bildet, so daß der Angriff des Rohrs durch ein Messer in Form einer Spitze das Eindringen unter einer geringen Kraft gestattet, die zu klein ist, um eine merkliche Verformung des Rohrs zu bewirken.

4. Rohrschneider mit geführtem Messser nach Anspruch 3, dadurch gekennzeichnet, daß der Spitzenwinkel der Kante des Schneidmessers gleich 120° ist.

5. Rohrschneider mit geführtem Messer nach einem der Ansprüche 1 bis 4, dadurch gekennzeichnet, daß seine Antriebsschnecke (3) mit einer Betätigungsstange (5) und einem Antriebsvierkant (6) versehen ist, die die Durchführung des Schnitts im Inneren des Grabens bzw. von außen vom Boden aus entweder mit Hilfe eines Steckschlüssels wie die Schlüssel zur Betätigung von Ventilen oder durch Anschluß an eine Motorantriebseinheit gestatten.
